# EUROPEAN PATENT SPECIFICATION

(11) **EP 1 785 227 B1**
(45) Date of publication and mention of the grant of the patent: **28.10.2009**
(21) Application number: 05425790.2
(22) Date of filing: 11.11.2005
(51) Int. Cl.: B23Q 16/10, B23Q 7/02, B23B 3/16

(54) **Tool holder turret**
Werkzeugrevolver
Tourelle revolver pour outils

(43) Date of publication of application: 16.05.2007
(73) Proprietor: DUPLOMATIC AUTOMAZIONE S.P.A., 20025 Legnano (MI) (IT)
(72) Inventor: De Bernardi, Franco, 21052 Busto Arsizio VA (IT)
(74) Representative: Perani, Aurelio

(56) References cited:
- WO-A-2004/087370
- US-A- 5 664 470
- US-A- 5 787 767
- US-A1- 2002 170 397

## Description

The present invention relates to a tool holder turret according to the preamble of claim 1.

Tool holder turrets are known in the field and are commonly used for turning and/or milling pieces, mounting the turret onto the machine tool in conventional positions.

An example of a tool holder turret is shown in US Patent no. 5,787,767. According to the above mentioned state of the art, the tool holder disc is driven by control means comprising a coaxial drive shaft, which is concentric to the longitudinal axis of the turret and is connected at one end to the tool holder disc and at the opposite end to an external control unit, such as an electric motor. Positioning the electric motor outside the body of the turret causes problems involving costs, since gear mechanisms for connecting the drive shaft and the shaft of the rotary tool holder disc one another are necessary, as well as problems involving size when mounting the turret onto the machine tool.

In order to obviate said drawbacks, it has been suggested in the field to place the electric drive motor of the tool holder disc directly inside the body of said tool holder disc, which is then in a concentric position around the rotor, thus reducing significantly the axial size of the turret. An example of such a connection is shown in US Patent Application no. 2002/0170397. Said solution, though reducing problems involving the axial size of the turret body, results in a series of huge drawbacks, first of all the fact that tool holders with radial shank of unified type cannot be mounted onto the disc unless the radial size of the tool holder disc is increased unacceptably, and the fact, too, that tool holders with rotary radial shank cannot be mounted.

An alternative solution suggested in the field concerning the installation of the electric motor inside the hollow body of a turret with direct connection of the rotor to the tool holder disc is disclosed in US Patent no. 5,664,470. According to the above mentioned technical solution, the electric motor is housed inside the stationary base body of the turret, the stator being fastened to the latter by means of a flexible wall placed at the end of said stator and arranged transversally with respect to turret axis. In the same way, the rotor, on the side facing towards the tool holder disc, is axially connected to the latter by means of the flexible flange - transversal with respect to the turret axis - of a tubular element which is concentric to the axis of said turret. As a consequence, in the known solution both the stator and the rotor are free to fluctuate to follow the axial movements resulting for the rotor as a consequence of the same axial movements of the tool holder disc when the latter is locked and unlocked with respect to the stationary body of the turret. Said technical solution is therefore subject to frequent breakings in the flexible components with which the motor is connected to the tool holder disc and to the body of the turret, as well as to the drawbacks which can occur as a consequence of the loss of coaxiality between stator and rotor of the motor, which can also result in the motor seizing up and in the turret being useless.

A further solution has been suggested by the Applicant and is described in the international patent application no. WO 2004/087370. According to the above mentioned state of the art, a tool holder turret comprises a stationary base body with a cavity extending along a longitudinal axis, a tool holder disc rotating with respect to the base body around the longitudinal axis, locking means for locking and unlocking the tool holder disc with respect to the base body, a first ring-shaped element which acts upon the locking means and can be moved axially between a first locking position of the tool holder disc and a second unlocking position of the tool holder disc, actuating means for moving the first ring-shaped element between the locking and unlocking positions, and control means for moving the tool holder disc between working positions angularly spaced one another around the longitudinal axis. The control means comprise an electric motor and a second ring-shaped element placed concentrically inside the first ring-shaped element and rigidly connected both axially and rotationally, at one end, to the tool holder disc and, at the opposite end, to the rotor of the electric motor.

A turret as mentioned above, though reducing the problems existing with previous turrets, still involves some drawbacks, first of all the one concerning the connection between the rotor of the electric motor and the second ring-shaped element. Such connection, which according to the embodiment described in the document referred to above, is made up of screw fastening components, requires a perfect coaxiality of the two elements so as to obtain an optimal performance of the motor as well as to prevent seizing-up problems of said motor due to a lack of coaxiality. This requires particular measures when producing the pieces and when mounting the tool holder turret, which results in higher manufacturing costs.

The object of the present invention is therefore to propose a tool holder turret having such structural and functional features as to meet the aforesaid requirements and to obviate at the same time the drawbacks existing in turrets referred to when disclosing the state of the art.

Said object is achieved by a tool holder turret according to claim 1.

Further characteristics and the advantages of the tool holder turret according to the present invention will be evident from the following description of a preferred embodiment thereof, given to an illustrative non-limiting purpose, with reference to the accompanying figures, in which:
- Figure 1 shows a sectioned longitudinal view of a turret according to the invention, arranged for the installation of radial tool holders for stationary tools;
- Figure 2 shows a detail of a tool holder disc for a turret as the one shown in Fig. 1, for the installation of axial tool holders for stationary tools;
- Figure 3 shows a front view of the turret of Fig. 1, taken on the side of the tool holder disc;
- Figure 4 shows a longitudinal section of a turret according to the invention, arranged for the installation of tool holders with radial shank for rotary tools;
- Figure 5 shows a sectioned longitudinal view of a different embodiment of a turret according to the invention, arranged for the installation of radial tool holders for stationary tools;
- Figure 6 shows a detail of the locking means of the turret shown in Fig. 5.

With reference to the accompanying figures, number 1 globally refers to a tool holder turret.

The tool holder turret 1 comprises a stationary base body 2 having a cavity 3 extending along a longitudinal axis x-x. A tool holder disc 4 is mounted rotatably with respect to the stationary base body 1 around a coaxial rotation axis coinciding with the longitudinal axis x-x.

A first ring-shaped element 5, made fixed to the body 1 through fastening means 6, screws in the example, is mounted in concentric position with respect to axis X-X. The ring-shaped element 5 carries a crown gear 7, which is then fixed to the base body 2 of the turret 1. Alternatively, the crown gear 7 can be carried directly by the base body 2 of the turret 1.

A second ring-shaped element 8 with its crown gear 9 is located concentrically inside the first ring-shaped element 5. The ring-shaped element 8 is fastened by means of corresponding fastening means 10, screws in the example, to the tool holder disc 4 and is then fixed in rotation with said tool holder disc 4. Alternatively, the crown gear 9 can be carried directly by the tool holder disc 4.

A third ring-shaped element 11, provided with its crown gear 12 facing towards the crown gears 7 and 9, is housed inside the cavity 3. The ring-shaped element 11 can be moved axially between a locking position in which the crown gear 12 is engaged simultaneously with both crown gears 7 and 9, thus locking the tool holder disc 4, and an unlocking position in which the crown gear 12 is disengaged from the teeth of the crowns 7 and 9, thus letting the tool holder disc 4 to rotate.

The aforesaid crown gears 7, 9 and 12 globally define locking means for locking and unlocking the tool holder disc 4 with respect to the stationary base body 2. Said locking means 7, 9, 12 can be carried out with different structures, for instance by means of coupling members like single or multiple disc brakes or brakes with hydraulically driven bushing.

The actuation of the locking means 7, 9, 12 is carried out through actuating means intended to move the locking means 7, 9, 12 between the locking position and the unlocking position of the tool holder disc 4.

The actuating means can be supplied with a pressurized fluid, a hydraulic fluid in the example. Alternatively, supply can be pneumatic, electric or electromagnetic.

In the example the actuating means comprise the ring-shaped actuating element 11, which is movable axially so as to lock and unlock the locking means 7, 9, 12, that is to engage and disengage the crown gears 7, 9, 12.

The turret 1 further comprises control means for moving the tool holder disc 4, when locked, between working positions angularly spaced one another around the longitudinal axis X-X.

The control means comprise an electric motor, globally referred to with 16, having a rotor element 17 and a stator element 18 housed in the stationary base body 2 of the turret 1.

The stator element 18 is fixed to the stationary base body 2 of the turret 1 and is located inside the cavity 3, concentrically to axis X-X, whereas the rotor element 17 is also placed inside the cavity 3, concentrically to axis X-X and to the stator element 18.

The rotor element 17 extends axially inside the cavity 3 of the stationary base body 2 until its head end 17a faces the tool holder disc 4, close to the latter, and is rigidly coupled at said head end 17a with the tool holder disc 4 both axially and rotationally.

By this way, the rotation of the rotor element 17 with respect to the stator element 18 causes the corresponding rotation of the tool holder disc 4 with respect to the stationary base body 2. Moreover, the electric motor 16 is fully integrated into the turret 1, i.e. into the stationary base body 2 of the turret 1, so that said base body 2 of the turret 1 acts as motor body or housing of the electric motor 16.

In the example shown in the accompanying figures, the rotor element 17 is fastened at its head end 17a to the ring-shaped element 8 by means of fastening screws 20. Since the ring-shaped element 8 is fastened in its turn to the tool holder disc 4 by means of the fastening screws 10, the rotor element 17 is rigidly coupled with the tool holder disc 4, axially and rotationally.

Alternatively, should the crown gear 9 be carried by the tool holder disc 4, the rotor element can be fastened at its head end directly to the tool holder disc.

In order to lock and unlock the tool holder disc 4 with respect to the stationary base body 2, the rotor element 17 cooperates with the locking means 7, 9, 12 and with the actuating means 11, as will be evident from the following of the present description.

Advantageously, the actuating means comprise a ring-shaped element 14 mounted into the cavity 3 in concentric position with respect to axis X-X, a chamber 11a for actuating locking of the locking means 7, 9, 12, and a chamber 11b for actuating unlocking of the locking means 7, 9, 12. As will be evident from the following of the description, the rotor element 17 cooperates with the actuating means 11, 14 for locking and unlocking the locking means 7, 9, 12.

The locking chamber 11a is located between the ring-shaped element 11 and the ring-shaped element 14 and is defined by a portion of the inner wall 2a of the base body 2 and by a portion of the outer wall 17c of the rotor element 17.

Conversely, the unlocking chamber 11b is defined by a portion of the inner wall 2a of the base body 2 and by the ring-shaped element 5 and 11.

The rotor element 17 further has an abutment element 19 protruding from the rotor element 17 into the cavity 3 of the base body 2. In the example shown in the accompanying figures, the abutment element 19 consists of a ring-shaped flange or shoulder protruding radially from the rotor element 17 into the cavity 3 towards the inner wall 2a of the base body 2.

The shoulder 19 acts as abutment element for the ring-shaped element 14 of the actuating means. In particular, the ring-shaped element 14 is intended to abut onto the shoulder 19 of the rotor element 17 through the interposition of an axial bearing 13.

In other words, the shoulder 19 allows the reaction forces enabling to lock and unlock the locking means 7, 9, 12 to be closed. In fact, the shoulder 19 is fixed to the ring-shaped element 8 carrying the crown gear 9 by means of the rotor element 17.

The locking 11a and unlocking 11b chambers are intended to be supplied with a pressurized fluid, typically a hydraulic fluid. Alternatively, pneumatic supply can be used.

In order to actuate the locking means 7, 9, 12 in locking condition, the hydraulic pressurized fluid is introduced into the chamber 11a so as to move axially the ring-shaped element 11. Said hydraulic pressurized fluid acts on one side upon the ring-shaped element 11, which moves axially so as to couple the teeth 7, 9, 12. On the other side, the hydraulic fluid acts upon the ring-shaped element 14, which is held in position by the shoulder 19, by means of the axial bearing 13.

The shoulder 19 transmits the reaction by means of the rotor element 17 to the ring-shaped element 8 carrying the teeth 9, so as to close the system of locking forces acting upon the teeth 7, 9 and 12.

The unlocking condition is obtained by introducing pressurized fluid into the chamber 11b so as to move the ring-shaped element 11 axially and to disengage the teeth 7, 9 and 12.

Advantageously, the rotor element 17 is shaped as a hollow shaft with a passing through cavity 3a open at both ends 17a and 17b of the rotor element 17. The cavity 3a of the rotor element 17 is defined near the fastening area to the ring-shaped element 8 by a circular crown having a pre-established radial thickness S, which depends on both the value of the torsional stresses to be transmitted and on the amount of radial space necessary to house the screw members 20 for fastening the end 17a of the rotor element 17 to the ring-shaped element 8 of the locking means 7, 9, 12.

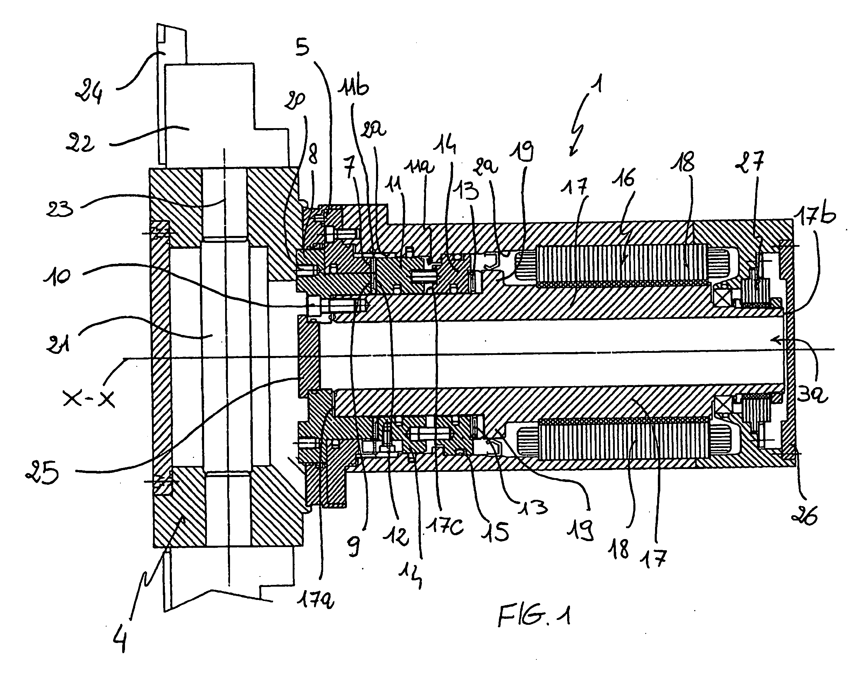

The tool holder disc 4 is provided with a cavity 21 and is intended - in the solution shown in Figure 1 - to house tool holders 22 with a radial shank 23 for the installation of stationary tools 24.

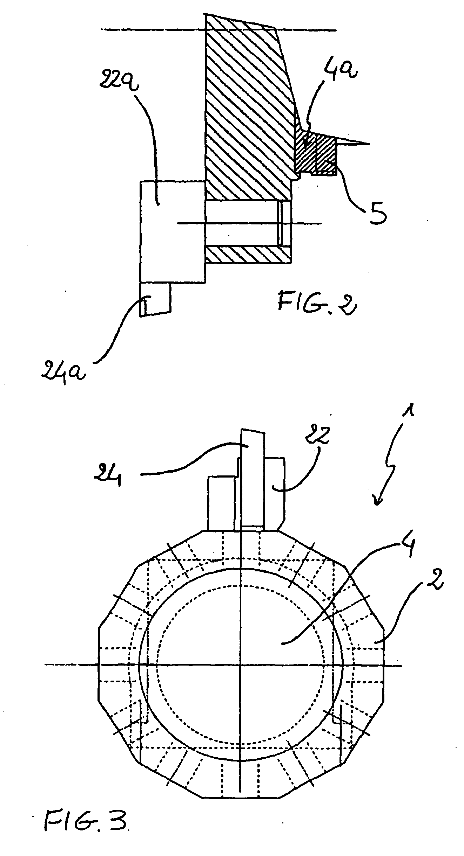

According to the alternative embodiment shown in Figure 2, the tool holder disc 4a lacks of the inner cavity and is arranged so as to house tool holders 22a with an axial shank 23a for the installation of stationary tools 24a.

According to the constructive solutions of Figure 1 and of Figure 2, since the axial cavity 3a of the rotor hollow shaft 17 is not used, the end 17a pointing towards the tool holder disc 4 or 4a is closed by a removable transversal plug 25. In the same way, the opposite end 17b is closed by a removable cap 26 fastened axially to the base body 2.

According to a preferred embodiment, the electric motor 16 is a servomotor conventionally associated with a position transducer 27 fitted onto the rotor hollow shaft 17.

The servomotor 16 and the transducer 27 are controlled by electronic devices not shown in the accompanying figures and known per se.

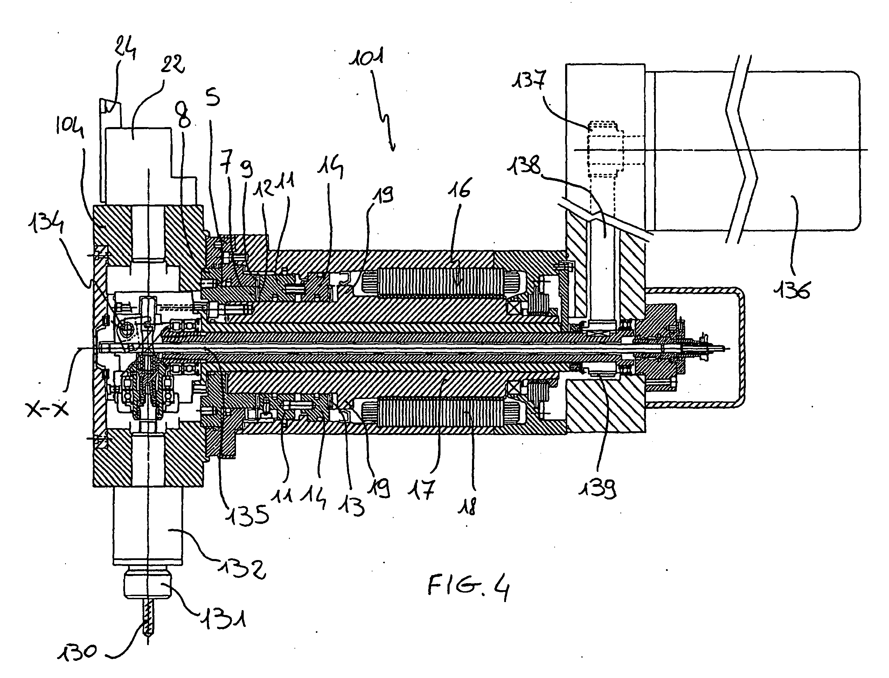

With reference to Figure 4, the constructive elements of the turret 101 corresponding to those described with reference to Figure 1 are referred to with the same numbers.

The turret 101 is arranged for the operation with rotary tools 130 mounted onto the spindle 131 of a tool holder 132 inserted radially onto the tool holder disc 4 with the shaft 133.

A drive assembly globally referred to with 134, conventional per se and housed in the cavity 21 of the tool holder disc 4, is provided for the rotation of the tools 130. The rotating movement is transferred to the assembly 134 by means of a drive shaft 135 turned by an auxiliary motor 136, fastened to the stationary base body 2 of the turret 1 and connected to the drive shaft 135 by means of a conventional series of drive gears 137, 138 and 139.

The drive shaft 135 is housed inside a hollow supporting element 140, which gets transversally through the cavity 3a of the rotor hollow shaft 17, the cap 26 and the plug 25 having been previously removed.

The cavity 3a can be used also for the passage of fluid pipes or for electrical connections.

As shown in Figure 4, beside with tool holders 132 for rotary tools 130, the tool holder disc 104 can be equipped with tool holders 22 for stationary tools 24.

The turret according to the invention can therefore work with tool holders for stationary tools or with tool holders for rotary tools, though maintaining a very small axial and transversal size.

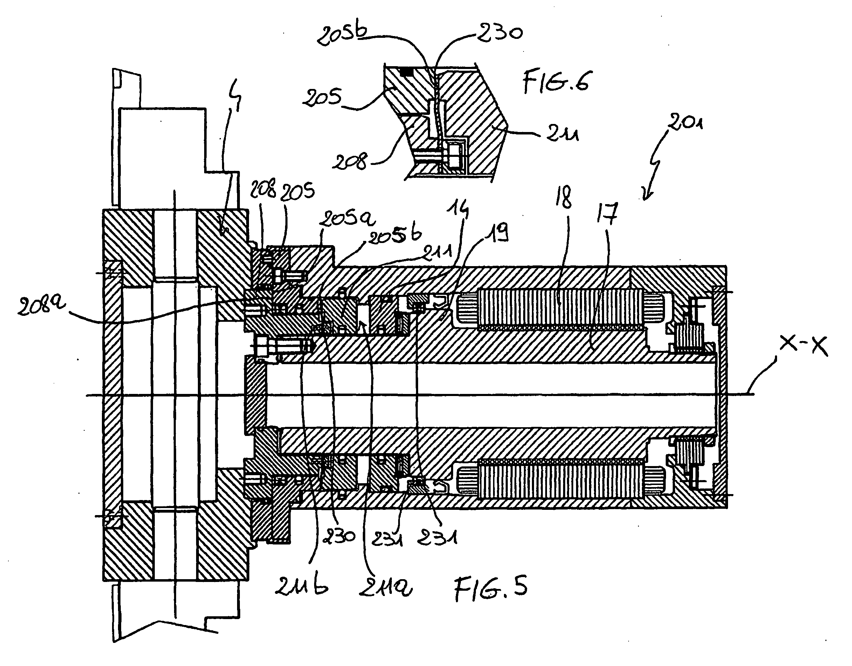

With reference to Figures 5 and 6, the constructive elements of the turret 201 corresponding to those described with reference to Figure 1 are referred to with the same numbers.

The turret 201 has locking means like disc brakes.

In particular, the movement of the ring-shaped element 211 enables to make in contact with friction the front surface 205a of the ring-shaped element 205, fixed to the stationary base body 2, with the opposed front surface 208a of the ring-shaped element 208 fixed to, the tool holder disc 4 and with the rotor element 17, and the front surface 205b of the ring-shaped element 205, opposed to the surface 205a, with a plate 230 fastened to the ring-shaped element 208 and placed in the unlocking chamber 211b between the ring-shaped elements 205 and 211.

Said locking means work in the same way as described with reference to the embodiment with crown gears 7, 9, 12, but for the fact that the plate 230 replaces the crown gears 7, 9, 12.

In particular, the braking effect occurs when the pressurized fluid is introduced into the chamber 211a and the ring-shaped element 211 moves axially for bring into contact the plate 230 against the ring-shaped element 205, and the force reaction through the ring-shaped element 14 and the rotor element 17 presses the ring-shaped element 208 against the ring-shaped element 205. The result is the braking action by friction between the plate 230 and the ring-shaped element 205 and between the ring-shaped element 208 and the ring-shaped element 205.

The plate 230 fastened to the ring-shaped element 208 enables the axial deformation thereof under the thrust of the ring-shaped element 211 of the actuating means, so as to enable the contact with friction of the ring-shaped element 211 with the ring-shaped element 205. The plate 230 further ensures the locking stiffness in torsional direction.

It should be pointed out that the plate 230 can also be left out, thus letting the ring-shaped element 211 get directly in contact with the ring-shaped element 205. In such a case, the braking effect derives only from the contact between the surfaces 205a and 208a, whereas the contact between the ring-shaped element 211 and the surface 205b of the ring-shaped element 205 does not cause any braking effect since the ring-shaped element 211 cannot be considered as rigid in torsional direction. In this case there should be a higher pressure of the fluid onto the ring-shaped element 11 whose thrust without the plate 230 does not create any braking effect.

When unlocking, conversely, the ring-shaped element 208 gets away from the ring-shaped element 205 and the ring-shaped element 211 gets back and lets the plate 230 free to get off the ring-shaped element 208. Thus, the rotation of the rotor element 17 takes place without any friction between the elements 205, 208, 211.

Advantageously, the turret 201 comprises two radial bearings 231 for stiffly supporting radially the rotor element 17 and thus enabling a correct rotation thereof.

With reference to the system with front teeth 7, 9, 12, it should be remarked that said radial bearings 231 are not necessary since the support is obtained by friction between the rotor element 17 and the ring-shaped element 14 of the actuating means and between the ring-shaped element 8, fastened to the rotor 17, and the ring-shaped element 5. In such a case a little radial play is left so as to enable a correct adjustment of the front teeth 7, 9, 12 of the locking means during locking.

It should be pointed out that the radial bearings 231 can also be used in the solution with front teeth 7, 9, 12, though leaving a little radial play for adjustment during locking.

Since the rotor element 17 can be rotated on the radial bearings 231, said rotor element 17 can represent - if suitably controlled - a rotating axis for the turret when the locking means are in unlocked configuration.

The turret can thus also become with a controlled rotating axis in which the rotation control is given by the motor 16. The motor 16 can be synchronous and suitably controlled by an electronic unit (not shown in the figures), which controls it as far as position, speed and angular movements are concerned.

As can be inferred from the previous description, the turret according to the present invention enables to meet requirements and to obviate the drawbacks referred to in the introduction to the present description with reference to the state of the art.

As a matter of fact, as was said, the turret allows to have a direct motor coaxial to the body of the turret and fully integrated into said turret.

In particular, the electric motor is fully integrated into the turret, i.e. into the stationary base body of the turret, so that the base body of the turret acts as driving body or shell of the electric motor.

Moreover, the turret with integrated motor according to the invention has a smaller number of pieces with respect to turrets described with reference to the state of the art, with advantages not only in terms of manufacturing costs but also in terms of smaller overall size and higher simplification and accuracy during assembly. Moreover, the turret can also become a rotating axis controlled as far as position, speed and angular movement are concerned.

Furthermore, the direct hold of the rotor element of the electric motor onto the tool holder disc and its location inside the stationary body of the turret make the turret compact and ensure a better coaxiality of driving elements.

Obviously, in order to meet specific and urgent requirements a technician in the field can make several changes and variations to the tool holder turret according to the invention as described above, all of them being nevertheless included in the scope of protection of the invention as defined by the following claims.

## Claims

1. Tool holder turret (1) comprising:
- a stationary base body (2) having a cavity (3) extending along a longitudinal axis (X-X),
- a tool holder disc (4) mounted rotatably with respect to said stationary base body (2) around a rotation axis coaxial with said longitudinal axis (X-X),
- locking means (7, 9, 12) for locking and unlocking said tool holder disc (4) with respect to said stationary base body (2),
- actuating means (11, 14) for actuating said locking means (7, 9, 12), and
- control means (16, 17, 18) for moving said tool holder disc (4) between working positions spaced angularly one another around said longitudinal axis (X-X),
said control means (16, 17, 18) comprising an electric motor (16) having a stator element (18) fixed to said stationary base body (2) and positioned concentrically to said longitudinal axis (X-X), and a rotor element (17) placed inside said cavity (3), concentrically to said longitudinal axis (x-x) and to said stator element (18), the rotation of said rotor element (17) with respect to said stator element (18) resulting in the corresponding rotation of said tool holder disc (4) with respect to said stationary base body (2),
wherein
- said stator element (18) and said rotor element (17) are housed inside said cavity (3) of said base body (2), and
- said rotor element (17)
extends in said cavity (3) along said longitudinal axis (X-X) until its head end (17a) faces said tool holder disc (4), close to the latter,
is rigidly coupled, at said head end (17a), with said tool holder disc (4) both axially and rotationally, and
cooperates with said locking means (7, 9, 12) and said actuating means (11, 14) for bringing about the locking and the unlocking of said tool holder disc (4) with respect to said stationary base body (2),
**characterized in that**
- said rotor element (17) is a one piece element, and
- said electric motor (16) is fully integrated into said holder turret (1) so that said stationary base body (2) acts as housing of the electric motor (16).

2. Turret (1) according to claim 1, wherein said locking means comprise a first crown gear (7) fixed to said stationary base body (2) and distributed around said longitudinal axis (X-X) of said cavity (3), a second crown gear (9) concentric to said first crown gear (7) and fixed to said tool holder disc (4), a third crown gear (12) movable axially under the action of said actuating means (11, 14) between a locking and an unlocking position of the tool holder disc (4) in which the third crown gear (12) is engaged and disengaged, respectively, with the first (7) and second (9) crown gear.

3. Turret (1) according to claim 2, wherein said actuating means comprise a ring-shaped actuating element (11) carrying said third crown gear (12) and movable axially under the pressure of a pressurized fluid for bringing about engaging and disengaging with said first crown gear (7) and said second crown gear (9).

4. Turret (201) according to claim 1, wherein said locking means comprise two opposed surfaces (205a, 208a) intended to be pressed into contact one another with friction, said two surfaces (205a, 208a) being carried by two corresponding ring-shaped elements (205, 208), integral with the base body (2) and with the tool holder disc (4) respectively, so as to lock and unlock said tool holder disc (4) with respect to said base body (2).

5. Turret (201) according to claim 4, wherein said locking means further comprise a plate (230) fastened to one (208) of said two ring-shaped elements (205, 208) and intended to be pressed into contact against a surface (205b) of the other ring-shaped element (205) of said two ring-shaped elements (205, 208).

6. Turret (1; 101; 201) according to one of the claims 1 to 5, wherein said actuating means further comprise a ring-shaped element (14) mounted into the cavity (3) in concentric position with respect to the longitudinal axis (X-X), and said rotor element (17) is provided with an abutment element (19), wherein said ring-shaped element (14) of the actuating means abuts against said abutment element (19) of the rotor element (17), with the interposition of an axial bearing (13), said pressurized fluid acting upon the ring-shaped actuating element (11) and upon the ring-shaped element (14) with the abutment element (19) of said actuating means (11, 14) for engaging said locking means (7, 9, 12, 205a, 208a, 230, 205b).

7. Turret (1; 101; 201) according to claim 6, wherein said abutment element (19) is a shoulder protruding radially from the rotor element (17) into the cavity (3) towards the inner wall (2a) of the stationary base body (2).

8. Turret (1; 101; 201) according to claim 6 or 7, wherein said abutment element (19), by means of said rotor element (17) cooperating with said locking means (7, 9, 12, 205a, 208a, 230, 205b), enables to close the reaction forces which allows the locking and unlocking of the locking means (7, 9, 12, 205a, 208a, 230, 205b)

9. Turret (1; 101; 201) according to any of the claims 3 to 8, wherein said actuating means (11, 14) comprise a chamber (11a) for actuating the locking of the locking means, and a chamber (11b) for actuating the unlocking the locking means, said chambers (11a, 11b) being intended to be supplied with said pressurized fluid so as to move axially said ring-shaped actuating element (11) and to lock and unlock said tool holder disc (4).

10. Turret (1; 101; 201) according to any of the claims 1 to 9, comprising radial bearings (231) for rigidly supporting radially said rotor element (17), so that said rotor element (17) represents a rotating axis for the turret (1; 101; 201) when said locking means are in unlocked configuration.

11. Turret (1; 101; 201) according to any of the claims 1 to 10, wherein said rotor element (17) is fastened at its head end (17a) to said tool holder disc (4).

12. Turret (1; 101; 201) according to any of the claims 1 to 11, wherein said rotor element (17) is fastened at its head end (17a) to a ring-shaped element (8) fixed to the tool holder disc (4) and carrying a crown gear (9).

## Patentansprüche

1. Werkzeughalter-Revolverkopf (1), der umfasst:
- einen stationären Basiskörper (2), der eine Ausnehmung (3) hat, welche sich längs einer Längsachse (X-X) erstreckt,
- eine Werkzeughalterscheibe (4), welche drehbar in Bezug auf den stationären Basiskörper (2) rund um eine Drehachse koaxial mit der Längsachse (X-X) befestigt ist,
- eine Verriegelungs- bzw. Sicherungseinrichtung (7, 9, 12) zum Verriegeln bzw. Sichern und zum Entriegeln bzw. Lösen der Werkzeughalterscheibe (4) in Bezug auf den stationären Basiskörper (2),
- eine Betätigungseinrichtung (11, 14) zum Betätigen der Sicherungseinrichtung (7, 9, 12), und
- eine Steuereinrichtung (16, 17, 18) zum Bewegen der Werkzeughalterscheibe (4) zwischen Arbeitspositionen, die winkelig beabstandet voneinander rund um die Längsachse (X-X) sind,
wobei die Steuereinrichtung (16, 17, 18) einen Elektromotor (16) aufweist, der ein Statorelement (18) hat, welches am stationären Basiskörper (2) fixiert ist und welches konzentrisch zur Längsachse (X-X) positioniert ist, und ein Rotorelement (17), welches innerhalb der Ausnehmung (3) konzentrisch zur Längsachse (X-X) und zum Statorelement (18) angeordnet ist,
wobei die Drehung des Rotorelements (17) in Bezug auf das Statorelement (18) die entsprechende Drehung der Werkzeughalterscheibe (4) in Bezug auf den stationären Basiskörper (2) zur Folge hat,
wobei
- das Statorelement (18) und das Rotorelement (17) innerhalb der Ausnehmung (3) des Basiskörpers (2) untergebracht sind, und
- das Rotorelement (17)
sich in die Ausnehmung (3) längs der Längsachse (X-X) erstreckt, bis dessen Kopfende (17a) der Werkzeughalterscheibe (4) nahe zu letzteren zugewandt ist,
fest am Kopfende (17a) mit der Werkzeughalterscheibe (4) sowohl axial als auch drehbar gekoppelt ist, und
mit der Sicherungseinrichtung (7, 9, 12) und der Betätigungseinrichtung (11, 14) funktionsmäßig zusammenwirkt, um das Sichern und das Lösen der Werkzeughalterscheibe (4) in Bezug auf den stationären Basiskörper (2) zu bewirken,
**dadurch gekennzeichnet, dass**
- das Rotorelement (17) ein einstückiges Element ist, und
- der Elektromotor (16) völlig im Halter-Revolverkopf (1) integriert ist, so dass der stationäre Basiskörper (2) als Gehäuse des Elektromotors (16) wirkt.

2. Revolverkopf (1) nach Anspruch 1, wobei die Sicherungseinrichtung ein erstes Kronenrad (7) aufweist, welches am stationären Basiskörper (2) fixiert ist und rund um die Längsachse (X-X) der Ausnehmung (3) verteilt ist, ein zweites Kronenrad (9) konzentrisch zum ersten Kronenrad (7), und das an der der Werkzeughalterscheibe (4) fixiert ist, ein drittes Kronenrad (12), das unter der Wirkung der Betätigungseinrichtung (11, 14) zwischen einer Sicherungs- und einer Loslösungsposition der Werkzeughalterscheibe (4), in welche das dritte Kronenrad (12) eingreift bzw. gelöst wird, mit dem ersten (7) und dem zweiten (9) Kronenzahnrad axial bewegbar ist.

3. Revolverkopf (1) nach Anspruch 2, wobei die Betätigungseinrichtung ein ringförmiges Betätigungselement (11) umfasst, welches das dritte Kronenrad (12) trägt und welches bewegbar unter dem Druck eines unter Druck stehenden Fluids bewegbar ist, um das Eingreifen und das Lösen mit dem ersten Kronenrad (7) und dem zweiten Kronenrad (9) zu bewirken.

4. Revolverkopf (201) nach Anspruch 1, wobei die Sicherungseinrichtung zwei gegenüberliegende Flächen (205a, 208a) umfasst, die dazu dienen sollen, in Kontakt miteinander mit Reibung gedrückt zu werden, wobei die beiden Flächen (205a, 208a) durch zwei entsprechende ringförmige Elemente (205, 208) getragen werden, die integriert mit dem Basiskörper (2) bzw. der Werkzeughalterscheibe (4) sind, um so die Werkzeughalterscheibe (4) in Bezug auf den Basiskörper (2) zu sichern und zu lösen.

5. Revolverkopf (201) nach Anspruch 4, wobei die Sicherungseinrichtung außerdem eine Platte (230) aufweist, welche an einem (208) der beiden ringförmigen Elemente (205, 208) befestigt ist und dazu dienen soll, in Kontakt gegen eine Fläche (205b) des anderen ringförmigen Elements (205) der beiden ringförmigen Elemente (205, 208) gedrückt zu werden.

6. Revolverkopf (1, 101; 201) nach einem der Ansprüche 1 bis 5, wobei die Betätigungseinrichtung außerdem ein ringförmiges Element (14) aufweist, welches in der Ausnehmung (3) in konzentrischer Position in Bezug auf die Längsachse (X-X) befestigt ist, und das Rotorelement (17) mit einem Anschlagelement (19) versehen ist, wobei das ringförmige Element (14) der Betätigungseinrichtung gegen das Anschlagelement (19) des Rotorelements (17) unter Einfügung eines axialen Lagers (13) anstößt, wobei das unter Druck stehende Fluid auf das ringförmige Betätigungselement (11) und auf das ringförmige Element (14) mit dem Anschlagelement (19) der Betätigungseinrichtung (11, 14) wirkt, um die Sicherungseinrichtung (7, 9, 12, 205a, 208a, 230, 205b) zu erfassen.

7. Revolverkopf (1, 101; 201) nach Anspruch 6, wobei das Anschlagelement (19) eine Schulter ist, die radial vom Rotorelement (17) in die Ausnehmung (3) in Richtung auf die Innenwand (2a) des stationären Basiskörpers (2) ragt.

8. Revolverkopf (1, 101; 201) nach Anspruch 6 oder 7, wobei das Anschlagelement (19) mittels des Rotorelements (17), welches mit der Sicherungseinrichtung (7, 9, 12, 205a, 208a, 230, 205b) funktionsmäßig zusammenwirkt, ermöglicht, die Reaktionskräfte zu schließen, welche das Sichern und das Lösen der Sicherungseinrichtung (7, 9, 12, 205a, 208a, 230, 205b) zulassen.

9. Revolverkopf (1, 101; 201) nach einem der Ansprüche 3 bis 8, wobei die Betätigungseinrichtung (11, 14) eine Kammer (11a) aufweist, um das Sichern der Sicherungseinrichtung zu bewirken, und eine Kammer (11b), um das Lösen der Sicherungseinrichtung zu bewirken, wobei die Kammern (11a, 11b) dazu dienen sollen, mit dem unter Druck stehenden Fluid beliefert zu werden, um somit das ringförmige Betätigungselement (11) axial zu bewegen und um die Werkzeughalterscheibe (4) zu sichern und zu lösen.

10. Revolverkopf (1, 101; 201) nach einem der Ansprüche 1 bis 9, welcher radiale Lager (231) aufweist, um das Rotorelement (17) radial fest zu lagern, so dass das Rotorelement (17) eine Drehachse für den Revolverkopf (1, 101; 201) darstellt, wenn die Sicherungseinrichtung im Loslösezustand ist.

11. Revolverkopf (1, 101; 201) nach einem der Ansprüche 1 bis 10, wobei das Rotorelement (17) an der Werkzeughalterscheibe (4) an seinem Kopfende (17a) befestigt ist.

12. Revolverkopf (1, 101; 201) nach einem der Ansprüche 1 bis 11, wobei das Rotorelement (17) am ringförmigen Element (8) an seinem Kopfende (17a) befestigt ist, welches an der der Werkzeughalterscheibe (4) fixiert ist und ein Kronenrad (9) trägt.

## Revendications

1. TOURELLE PORTE-OUTILS (1) comportant :
- un corps de base fixe (2) ayant une cavité (3) s'étendant le long d'un axe longitudinal (X-X),
- un disque porte-outils (4) monté de façon pivotante par rapport au corps de base fixe (2) susdit autour d'un axe de pivotement coaxial par rapport à l'axe longitudinal (X-X) susdit,
- des moyens de verrouillage (7, 9, 12) pour le verrouillage et le déverrouillage du disque porte-outils (4) susdit par rapport au corps de base fixe (2) susdit,
- des moyens d'actionnement (11, 14) pour actionner les moyens de verrouillage (7, 9, 12) susdits, et
- des moyens de commande (16, 17, 18) pour déplacer le disque porte outils (4) susdit entre des positions de travail les unes étant écartées angulairement des autres autour de l'axe longitudinal (X-X) susdit,
les moyens de commande (16, 17, 18) susdits comportant un moteur électrique (16) ayant un élément du stator (18) fixé au corps de base fixe (2) susdit et positionné concentriquement à l'axe longitudinal (X-X) susdit, et un élément du rotor (17) agencé à l'intérieur de la cavité (3) susdite, concentriquement par rapport à l'axe longitudinal (X-X) susdit et à l'élément du stator (18) susdit,
le pivotement de l'élément du rotor (17) susdit par rapport à l'élément du stator (18) susdit aboutissant au pivotement y afférent du disque porte-outils (4) par rapport au corps de base fixe (2) susdit,
où
- l'élément du stator (18) susdit et l'élément du rotor (17) susdit sont logés à l'intérieur de la cavité (3) susdite du corps de base (2) susdit, et
- l'élément du rotor (17) susdit
s'étend dans la cavité (3) susdite le long de l'axe longitudinal (X-X) susdit jusqu'à ce que son extrémité de tête (17a) soit vis-à-vis du disque porte-outils (4) susdit, près de ce-dernier,
est rigidement couplé, à niveau de l'extrémité de tête (17a) susdite, avec le disque porte-outils (4) susdit tant axialement que de façon pivotante, et
coopère avec les moyens de verrouillage (7, 9, 12) susdits et les moyens d'actionnement (11, 14) susdits pour générer le verrouillage et le déverrouillage du disque porte-outils (4) susdit par rapport au corps de base fixe (2),
**caractérisé en ce que**
- l'élément du rotor (17) susdit est un élément monobloc, et que
- le moteur électrique (16) susdit est entièrement intégré à la tourelle porte-outils (1) susdite de sorte que le corps de base fixe (2) susdit fasse fonction de logement du moteur électrique (16).

2. TOURELLE (1) selon la revendication 1, où les moyens de verrouillage susdits comportent une première couronne dentée (7) fixée au corps de base fixe (2) susdit et distribuée autour de l'axe longitudinal (X-X) susdit de la cavité (3) susdite, une seconde couronne dentée (9) concentrique par rapport à la première couronne dentée (7) susdite et fixée au disque porte-outils (4) susdit, une troisième couronne dentée (12) pouvant être laissé bouger axialement sous l'effet des moyens d'actionnement (11, 14) susdits entre une position de verrouillage et une position de déverrouillage du disque porte-outils (4) dans lequel la troisième couronne dentée (12) est engagée et désengagée, respectivement, avec la première (7) et la seconde (9) couronne dentée.

3. TOURELLE (1) selon la revendication 2, où les moyens d'actionnement susdits comportent un élément d'actionnement en forme d'anneau (11) soutenant la troisième couronne dentée (12) susdite et pouvant être laissé bouger axialement sous la pression d'un fluide pressurisé pour générer l'engagement et le désengagement avec la première couronne dentée (7) susdite et la seconde couronne dentée (9) susdite.

4. TOURELLE (201) selon la revendication 1, où les moyens de verrouillage susdits comportent deux surfaces opposées (205a, 208a) aptes à être comprimées l'une contre l'autre par frottement, les deux surfaces (205a, 208a) susdites étant soutenues par deux éléments en forme d'anneau y afférents (205, 208), faisant partie intégrante du corps de base (2) et du disque porte-outils (4), respectivement, de façon à verrouiller et déverrouiller le disque porte-outils (4) susdit par rapport au corps de base (2) susdit.

5. TOURELLE (201) selon la revendication 4, où les moyens de verrouillage susdits comportent aussi une plaque (230) fixée à l'un (208) des deux éléments en forme d'anneau (205, 208) susdits et apte à être comprimée contre une surface (205b) de l'autre élément en forme d'anneau (205) susdit des deux éléments en forme d'anneau (205, 208) susdits.

6. TOURELLE (1, 101, 201) selon l'une des revendications 1 à 5, où les moyens d'actionnement susdits comportent aussi un élément en forme d'anneau (14) monté à l'intérieur de la cavité (3) dans sa position concentrique par rapport à l'axe longitudinal (X-X), et l'élément du rotor (17) susdit est muni d'un élément de butée (19), où l'élément en forme d'anneau (14) susdit des moyens d'actionnement bute contre l'élément de butée (19) susdit de l'élément du rotor (17), avec l'interposition d'un palier axial (13), le fluide pressurisé susdit agissant sur l'élément d'actionnement en forme d'anneau (11) et sur l'élément en forme d'anneau (14) avec l'élément de butée (19) des moyens d'actionnement (11, 14) susdits pour l'engagement des moyens de verrouillage (7, 9, 12, 205a, 208a, 230, 205b) susdits.

7. TOURELLE (1, 101, 201) selon la revendication 6, où l'élément de butée (19) susdit est une épaule saillant radialement de l'élément du rotor (17) dans la cavité (3) vers la paroi intérieure (2a) du corps de base fixe (2) .

8. TOURELLE (1, 101, 201) selon la revendication 6 ou 7, où l'élément de butée (19) susdit, moyennant l'élément du rotor (17) susdit coopérant avec les moyens de verrouillage (7, 9, 12, 205a, 208a, 230, 205b) susdits, permet d'arrêter les forces de réaction qui permettent le verrouillage et le déverrouillage des moyens de verrouillage (7, 9, 12, 205a, 208a, 230, 205b).

9. TOURELLE (1, 101, 201) selon n'importe quelle des revendications 3 à 8, où les moyens d'actionnement (11, 14) susdits comportent une chambre (11a) pour actionner le verrouillage des moyens de verrouillage et une chambre (11b) pour actionner le déverrouillage des moyens de verrouillage, les chambres (11a, 11b) susdites étant aptes à être alimentées avec le fluide pressurisé susdit de façon à déplacer axialement l'élément d'actionnement en forme d'anneau (11) susdit et à verrouiller et déverrouiller le disque porte-outils (4) susdit.

10. TOURELLE (1, 101, 201) selon n'importe quelle des revendications 1 à 9, comportant des paliers radiaux (231) pour soutenir rigidement et radialement l'élément du rotor (17) susdit, de sorte que l'élément du rotor (17) représente un axe de pivotement pour la tourelle (1, 101, 201) si les moyens de verrouillage susdits sont dans leur configuration déverrouillée.

11. TOURELLE (1, 101, 201) selon n'importe quelle revendication 1 à 10, où l'élément du rotor (17) est fixé à niveau de son extrémité de tête (17a) au disque porte-outils (4) susdit.

12. TOURELLE (1, 101, 201) selon n'importe quelle des revendications 1 à 11, où l'élément du rotor (17) susdit est fixé à niveau de son extrémité de tête (17a) à un élément en forme d'anneau (8) fixé au disque porte-outils (4) et soutenant une couronne dentée (9).
